# EUROPEAN PATENT SPECIFICATION

(11) **EP 4 276 005 B1**
(45) Date of publication and mention of the grant of the patent: **31.01.2024**
(21) Application number: 22184265.1
(22) Date of filing: 12.07.2022
(51) Int. Cl.: B63B 1/10, B63B 5/14, F03D 13/25, B63B 35/44, E02B 17/00

(54) **FLOATING-TYPE FOUNDATION STRUCTURE OF STEEL TUBE-SUPPORTED PRESTRESSED CONCRETE**
SCHWIMMENDE GRÜNDUNGSSTRUKTUR AUS STAHLROHR GESTÜTZTEM SPANNBETON
STRUCTURE DE FONDATION DE TYPE FLOTTANT EN BÉTON PRÉCONTRAINT SUPPORTÉ PAR DES TUBES D'ACIER

(30) Priority: 13.05.2022 CN 202210520324; 13.05.2022 CN 202221157538 U
(43) Date of publication of application: 15.11.2023
(73) Proprietor: Chongqing University, Chongqing 400045 (CN)
(72) Inventor: Wang, Yu-Hang, Chongqing, 400045 (CN); Lu, Yao, Chongqing, 400045 (CN); Zhou, Xu-Hong, Chongqing , 400045 (CN); Yang, Qing-shan, Chongqing , 400045 (CN); Bai, Jiu-Lin, Chongqing , 400045 (CN); Ke, Ke, Chongqing , 400045 (CN); Luo, Yin-Tao, Chongqing , 400045 (CN)
(74) Representative: Huang, Liwei

(56) References cited:
- CN-U- 214 451 706

## Description

### TECHNICAL FIELD

The present invention relates to a floating-type foundation structure of steel tube-supported prestressed concrete, and is applied to the technical field of offshore wind power generation.

### BACKGROUND

The wind power energy source is a renewable clean energy source. The resource reserve of the deep-sea wind power energy source in China is in the front rank of the world, and the offshore wind power industry has a promising development prospect. Compared with the onshore wind power energy source, the offshore wind power energy source has the advantages of higher power generation of wind turbines, higher installed capacity of a single turbine, more stable operation of wind turbines, no land occupation for wind power farm construction, etc. With the rapid development of offshore wind power, the development of offset wind power resources is gradually saturated in China, and the development of offshore wind power generation from intertidal zones and offshore areas to deep-sea areas is inevitable.

With the increase of water depth, it is difficult for conventional fixed offshore wind turbine foundation structures to satisfy the requirements of deep-sea wind power development, and the deadweight and engineering cost of the fixed offshore wind turbines also greatly increases with the water depth. The comprehensive cost of floating-type foundation structures in deep-sea areas is much lower than that of the fixed foundation structures in deep-sea areas, and the floating-type foundation structures is good in maneuverability and easy to disassemble, and can be recycled after the service period expires.

Semi-submersible foundation structures can be constructed on the shore, then towed to the specified location to be connected to the pre-installed mooring system, so they are low in offshore installation cost but high in manufacturing cost. Majority of the currently designed floating-type wind turbine foundation structures are of pure steel structures with high cost, heavy welding workload and poor fatigue performance. Therefore, it is a great challenge to popularize large-scale commercial applications in the future.

In order to solve the above problems, it is necessary to develop new semi-submersible foundations to solve or improve the problems of high foundation cost, tedious construction, poor fatigue performance or the like, in order to make technical preparations for further development of offshore wind power generation.

Some prior arts can be seen in CN 214451706U.

### SUMMARY

The present invention discloses a floating-type foundation structure of steel tube-supported prestressed concrete. Compared with conventional pure steel floating-type foundations, posts are made of prestressed reinforced concrete, so the material cost is lower and the durability is better. Compared with the pure steel structures, the structure has higher deadweight, so it is advantageous for the stability and motion performance of the floating-type foundation. By providing heave plates, the additional mass coefficient and potential energy damping coefficient can be increased, so that the amplitude of motion response is reduced and the hydrodynamic performance of the structure is improved. The members in the supporting joint regions are welded to the embedded connecting plates, respectively, and the connecting plates are connected to each other. Compared with the conventional intersecting joints, the stress transmission path is clearer, the complexity of stress in the joint regions is reduced, and the fatigue resistance is improved. The structure is simple in construction, and most members can be detachably constructed, so that the construction efficiency can be significantly improved, the construction quality can be ensured and the construction cost can be effectively reduced.

The invention is set out in the appended set of claims.

A floating-type foundation structure of steel tube-supported prestressed concrete is provided, including posts, steel bushings, cross struts, inclined struts, heave plates, reinforcing plates, connecting plates and partition plates.

The posts are of prestressed concrete structures, and prestressed ducts are reserved in the posts, and double layered steel bushing with partition plates are placed at upper and lower ends, which are poured integrally for prestress tension. The concrete in the steel bushings is UHPC.

The posts are arranged in a regular triangle, and a wind turbine generator set tower may be installed on any one of the posts. The cross struts are connecting members between the posts, and the cross struts are of concrete-filled steel tube structures. The cross struts are inserted into the steel tubes in the inner side of the steel bushings, and welded at two layers of steel tubes, respectively. In order to enhance the connection rigidity between posts, the inclined struts are arranged in planes where the posts and the cross struts are located, and connected to the upper steel bushings and the lower cross struts to form K-shaped joints. The inclined struts are hollow steel tubes. The inclined struts are connected to the steel bushings in the same way as the cross struts. The ends of the inclined struts are welded to the connecting plates, and welded to the connecting plates in the middle portions of the cross struts. The reinforcing rings are welded to the cross struts to improve the out-of-plane stability of the connecting plates. The steel bushings, the cross struts, the inclined struts and the connecting plates are pre-notched or pre-holed.

The heave plates are circular steel plates with an air permeability of 10% and a number of holes of 24, and are welded to the lower steel bushings. The reinforcing plates are trapezoidal steel plates, which are arranged at intervals in one circle between the heave plates and the steel bushings at the same angle and welded to the steel bushings and the heave plates, respectively. The connecting plates are steel plates.

Compared with the prior art, the present invention has the following beneficial effects.
(1) The posts are made of a prestressed concrete material. Compared with the conventional pure steel floating-type foundation, the material cost is lower, the deadweight is larger, it is advantage for the stability and motion performance of the floating-type foundation, and the construction cost is lower.
(2) The supporting joint regions are welding connected to the connecting plates by the members, and the connecting plates are connected to each other by welding, so the stress transmission path is clear. Compared with the intersecting joints, the stress complexity is reduced and the fatigue resistance is better.
(3) The wind turbines can be arranged on the top of any post, having more flexibility.
(4) The whole foundation has a regular triangle shape and reasonable in construction. The cross struts and the inclined struts are arranged between the posts to enhance the in-plane rigidity, and the reinforcing rings are arranged in the joint regions to enhance the out-of-plane stability of the joints, so that both of the global stability and local stability are excellent.

### BRIEF DESCRIPTION OF THE DRAWINGS

FIG. 1 is an overall schematic view according to the present invention;
FIG. 2 is a schematic view of a foundation structure according to the present invention;
FIG. 3a a schematic view of posts according to the present invention;
FIG. 3b is a schematic view of FIG. 3a along the a-a section;
FIG. 3c is a schematic view of FIG. 3a along the b-b section;
FIG. 4 is a schematic view of connecting steel bushings to cross struts and inclined struts according to the present invention;
FIG. 5 is a schematic view of heave plates according to the present invention;
FIG. 6a is a schematic view of connecting cross strut to inclined struts according to the present invention;
FIG. 6b is a schematic view of FIG. 6a along the a-a section;
in which:
   1: post; 2: steel bushing; 3: cross strut; 4: inclined strut; 5: heave plate; 6: reinforcing plate; 7: connecting plate; 8: reinforcing ring; 9: partition plate; 111: longitudinal steel bar; 112: transverse steel bar; and, 113: tie bar.

### DETAILED DESCRIPTION

The present invention will be further described below with reference to the accompanying drawings.

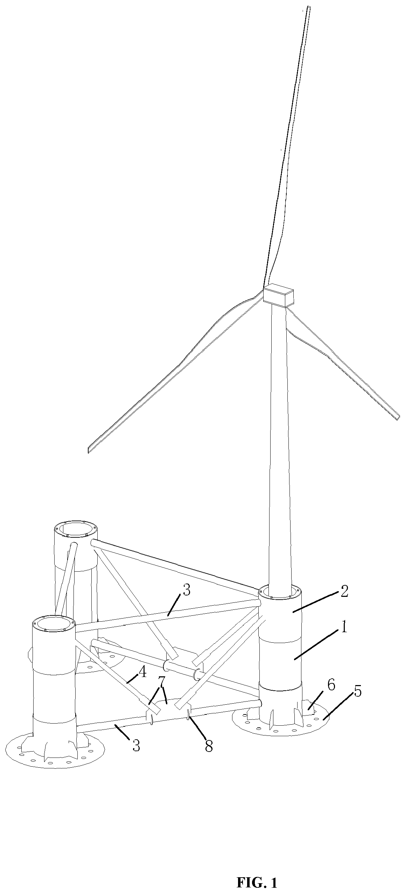

FIG. 1 shows an overall schematic view of a floating-type foundation structure of steel tube-supported prestressed concrete according to the present invention. The system includes posts 1, steel bushings 2, cross struts 3, inclined struts 4, heave plates 5, reinforcing plates 6, connecting plates 7, reinforcing rings 8, and partition plates 9. A wind turbine generator set tower may be installed in any one of the posts. The cross struts 3 may be concrete-filled steel tubes, and the inclined struts 4 may be hollow steel tubes.

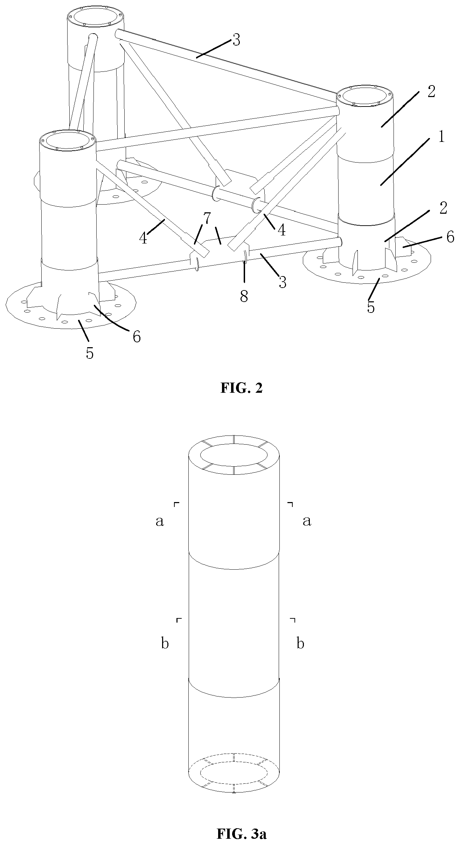

As shown in FIG. 2, the foundation structure includes three posts 1, which are arranged in a regular triangle. The posts are of hollow prestressed concrete structures. To facilitate the connection and construction of the posts 1, the steel bushings 2 are installed on the tops and bottoms of the posts and integrally poured with the posts. The connecting members between the posts 1 are cross struts 3, the cross struts are welded to the steel bushings 2, and the inclined struts 4 are arranged in planes formed by the posts 1 and the cross struts 3. The cross struts 3 are connected to the inclined struts 4 through the connecting plates 7. In order to enhance the out-of-plane rigidity of the connecting plates 7, two reinforcing rings 8 are welded outside the cross strut 3 at each joint. The heave plates 5 are installed on the bottom of the posts 1 and welded to the steel bushings 2. A circle of reinforcing plates 6 is arranged on each of the heave plates 5.

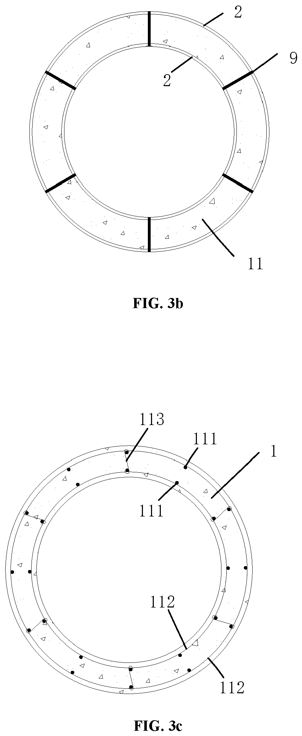

FIGS. 3a-3c show schematic views of the posts 1 and the sections thereof. The steel bushings 2 are double layered steel tubes. The partition plates 9 are welded between the inner and outer layers of steel tubes, and the concrete in the steel bushings is ultra-high performance concrete (UHPC). Prestressed tendon ducts are reserved in the posts 1. Longitudinal steel bars 111, transverse steel bars 112 and tie bars 113 are provided in the concrete of the posts.

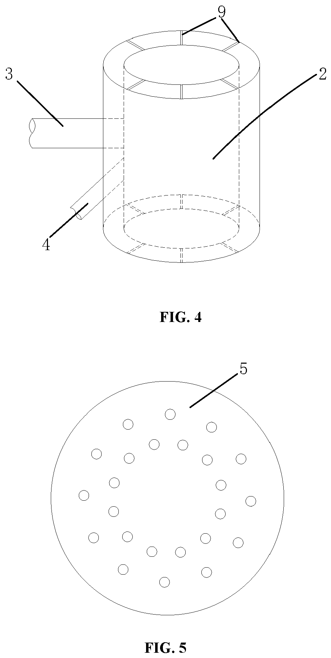

As shown in FIG. 4, holes are formed at the corresponding positions of the steel bushings 2. The cross struts 3 and the inclined struts 4 are inserted into the inner tubes of the steel bushings, and the cross struts 3 are welded to the two layers of steel tubes of the steel bushings 2, respectively.

FIG. 5 is a schematic view showing that the number of holes on the heave plate is 24.

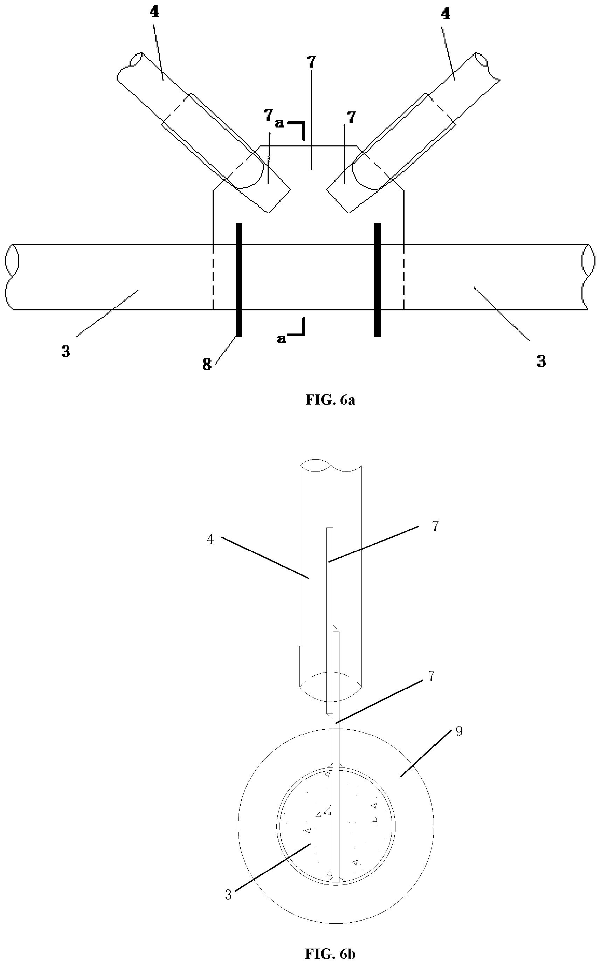

As shown in FIGS. 6a-6b, the cross struts 3 are concrete-filled steel tubes, and the inclined struts 4 are hollow steel tubes. In the K-shaped joint regions, the steels tubes of the cross struts 3 are notched, and the connecting plates 7 are inserted into the steel tubes on the bottom of the cross struts 3 and welded to the steel tubes. In order to enhance the out-of-plane rigidity of joints, the reinforcing rings 8 are welded on the outer side of the steel tubes of the cross struts, and notches are formed at the corresponding position of the connecting plate 7. The inclined struts 4 are notched and inserted into another connecting plate 7, and welded to two sides of the connecting plate 7 in the notches, respectively. The two connecting plates 7 are connected by welding. The concrete in the joint regions is UHPC.

The present invention provides a floating-type foundation structure of steel tube-supported prestressed concrete. This structure has the advantages of simple construction, good stability, low construction cost, excellent fatigue performance or the like, and is very suitable for the foundation construction of offshore wind power generation facilities.

The foregoing description merely shows the preferred implementations of the present invention, and the present invention is not limited to the specific implementations described above.

## Claims

1. A floating-type foundation structure of steel tube-supported prestressed concrete, comprising posts (1), cross struts (3), inclined struts (4), and heave plates (5), wherein the posts (1) are arranged in a regular triangle, the inclined struts (4) are arranged in the planes formed by the posts (1) and the cross struts;
**characterized in that**
the floating-type foundation structure further comprises steel bushings (2), reinforcing plates (6) and connecting plates (7) and partition plates(9);
wherein the steel bushings (2) are double layered steel tubes, and the steel bushings (2) are installed at both upper and lower ends of the posts (1) and integrally poured with the posts (1);
the steel bushing (2) is formed by welding partition plates (9) between double layers of steel tubes, wherein the partition plates are arranged in a circle;
the cross struts (3) are connecting members between the posts, and are welded to the steel bushings (2);
one end of the inclined strut (4) is connected to the steel bushing (2), while the other end thereof is fixed to a lower cross strut (3), so that the inclined struts (4) and the cross struts (3) form K-shaped joint regions, wherein the cross struts (3) are connected to the inclined struts (4) through the connecting plates (7);
the heave plates (5) are located under the posts (1) and welded on the bottom of the steel bushings (2);
the reinforcing plates (6) are arranged in a circle and arranged at intervals on the heave plate (5) ; and, the reinforcing plates (6) are welded to the steel bushings (2) and to the heave plates (5);
wherein one end of the cross strut (3) is inserted into the steel tube of the inner layer of the steel bushing (2), and welded to both of the two layers of steel tubes of the steel bushing (2) on the insertion side.

2. The floating-type foundation structure of steel tube-supported prestressed concrete according to claim 1, wherein, in the K-shaped joint regions, the reinforcing rings (8) are sheathed and welded on the cross struts (3); first connecting plates are inserted into the bottoms of the lower cross struts (3) through the reinforcing rings (8) and welded to the steel tube walls of the cross struts (3) and the reinforcing rings (8), respectively; notches are formed at the ends of the steel tubes of the inclined struts (4) along the sections thereof, and the degree of notching is the same as the thickness of the second connecting plates; the second connecting plates are inserted into the notches and welded to the steel tubes of the inclined struts (4) in both sides of the notches, respectively; and, the first connecting plates are welded to the second connecting plates.

3. The floating-type foundation structure of steel tube-supported prestressed concrete according to claim 2, wherein the heave plate (5) is a steel plate with holes, with air permeability being 10% to 15% and the number of holes being 20 to 24; the reinforcing plates (6) are trapezoidal or triangular steel plates; the reinforcing rings (8) are circular solid steel plates; and, the reinforcing plates (6), the connecting plates (7) and the partition plates (9) are square steel plates.

4. The floating-type foundation structure of steel tube-supported prestressed concrete according to claim 1, 2 or 3, wherein the posts (1) are of hollow concrete structure having prestressed ducts reserved herein and having circular or square cross sections.

5. The floating-type foundation structure of steel tube-supported prestressed concrete according to claim 1, 2 or 3, wherein the cross struts (3) are of concrete-filled steel tube structure having circular or square cross sections, and the inclined struts (4) are hollow steel tubes having circular or square cross sections.

6. The floating-type foundation structure of steel tube-supported prestressed concrete according to claim 1, 2 or 3, wherein the concrete filled inside the steel bushings (2) is UHPC, and the concrete in the posts (1) is ordinary concrete; the concrete filled in the cross strut sections where the connecting plates are located is UHPC; and, ordinary concrete is filled in other regions of the cross struts and in the cross struts without the connecting plates.

7. The floating-type foundation structure of steel tube-supported prestressed concrete according to claim 1, 2 or 3, wherein a wind turbine generator set is located on any one of the posts (1).

## Patentansprüche

1. Schwimmende Fundamentstruktur aus stahlrohrgestütztem Spannbeton,
umfassend Pfosten (1), Querstreben (3), Schrägstreben (4) und Hebeplatten (5), wobei die Pfosten (1) in einem gleichseitigen Dreieck angeordnet sind, wobei die Schrägstreben (4) in den durch die Pfosten (1) und die Querstreben ausgebildeten Ebenen angeordnet sind;
**dadurch gekennzeichnet, dass**
die schwimmende Fundamentstruktur ferner Stahlbuchsen (2), Verstärkungsplatten (6) und Verbindungsplatten (7) und Trennplatten (9) umfasst;
wobei die Stahlbuchsen (2) doppelschichtige Stahlrohre sind und die Stahlbuchsen (2) sowohl an einem oberen als auch an einem unteren Ende der Pfosten (1) installiert und einstückig mit den Pfosten (1) gegossen sind;
die Stahlbuchse (2) durch Verschweißen von Trennplatten (9) zwischen Doppelschichten aus Stahlrohren ausgebildet ist, wobei die Trennplatten in einem Kreis angeordnet sind;
die Querstreben (3) Verbindungselemente zwischen den Pfosten sind und mit den Stahlbuchsen (2) verschweißt sind;
ein Ende der Schrägstrebe (4) mit der Stahlbuchse (2) verbunden ist, während das andere Ende davon an einer unteren Querstrebe (3) befestigt ist, sodass die Schrägstreben (4) und die Querstreben (3) K-förmige Anschlussregionen ausbilden, wobei die Querstreben (3) durch die Verbindungsplatten (7) mit den Schrägstreben (4) verbunden sind;
sich die Hebeplatten (5) unter den Pfosten (1) befinden und an der Unterseite der Stahlbuchsen (2) verschweißt sind;
die Verstärkungsplatten (6) in einem Kreis angeordnet und in Intervallen auf der Hebeplatte (5) angeordnet sind; und die Verstärkungsplatten (6) mit den Stahlbuchsen (2) und mit den Hebeplatten (5) verschweißt sind;
wobei ein Ende der Querstrebe (3) in das Stahlrohr der inneren Schicht der Stahlbuchse (2) eingeführt und einführseitig mit beiden der zwei Stahlrohrschichten der Stahlbuchse (2) verschweißt ist.

2. Schwimmende Fundamentstruktur aus stahlrohrgestütztem Spannbeton nach Anspruch 1, wobei in den K-förmigen Anschlussregionen die Verstärkungsringe (8) an den Querstreben (3) ummantelt und verschweißt sind; erste Verbindungsplatten durch die Verstärkungsringe (8) in die Unterseiten der unteren Querstreben (3) eingeführt und mit den Stahlrohrwänden der Querstreben (3) bzw. den Verstärkungsringen (8) verschweißt sind; an den Enden der Stahlrohre der Schrägstreben (4) entlang der Bereiche davon Kerben ausgebildet sind und der Grad der Kerbung gleich der Dicke der zweiten Verbindungsplatten ist; die zweiten Verbindungsplatten in die Kerben eingeführt und jeweils auf beiden Seiten der Kerben mit den Stahlrohren der Schrägstreben (4) verschweißt sind; und die ersten Verbindungsplatten mit den zweiten Verbindungsplatten verschweißt sind.

3. Schwimmende Fundamentstruktur aus stahlrohrgestütztem Spannbeton nach Anspruch 2, wobei die Hebeplatte (5) eine Stahlplatte mit Löchern ist, wobei die Luftdurchlässigkeit 10 % bis 15 % beträgt und die Anzahl der Löcher 20 bis 24 beträgt; die Verstärkungsplatten (6) trapezförmige oder dreieckige Stahlplatten sind; die Verstärkungsringe (8) kreisförmige massive Stahlplatten sind; und die Verstärkungsplatten (6), die Verbindungsplatten (7) und die Trennplatten (9) quadratische Stahlplatten sind.

4. Schwimmende Fundamentstruktur aus stahlrohrgestütztem Spannbeton nach Anspruch 1, 2 oder 3, wobei die Pfosten (1) über eine hohle Betonstruktur verfügen, die hierin vorbehaltene vorgespannte Kanäle aufweisen und kreisförmige oder quadratische Querschnitte aufweisen.

5. Schwimmende Fundamentstruktur aus stahlrohrgestütztem Spannbeton nach Anspruch 1, 2 oder 3, wobei die Querstreben (3) aus einer mit Beton gefüllten Stahlrohrstruktur mit kreisförmigen oder quadratischen Querschnitten sind und die Schrägstreben (4) hohle Stahlrohre mit kreisförmigen oder quadratischen Querschnitten sind.

6. Schwimmende Fundamentstruktur aus stahlrohrgestütztem Spannbeton nach Anspruch 1, 2 oder 3, wobei der im Inneren der Stahlbuchsen (2) eingefüllte Beton UHPC ist und der Beton in den Pfosten (1) gewöhnlicher Beton ist; der in den Querstrebenbereichen, in denen sich die Verbindungsplatten befinden, eingefüllte Beton UHPC ist; und gewöhnlicher Beton in anderen Regionen der Querstreben und in den Querstreben ohne die Verbindungsplatten eingefüllt ist.

7. Schwimmende Fundamentstruktur aus stahlrohrgestütztem Spannbeton nach Anspruch 1, 2 oder 3, wobei sich auf einem beliebigen der Pfosten (1) ein Windturbinengeneratorsatz befindet.

## Revendications

1. Structure de fondation de type flottant en béton précontraint supporté par des tubes d'acier,
comprenant des montants (1), des entretoises transversales (3), des entretoises inclinées (4) et des plaques de pilonnement (5), lesdits montants (1) étant agencés selon un triangle régulier, lesdites entretoises inclinées (4) étant agencées dans les plans formés par les montants (1) et les entretoises transversales ;
**caractérisée en ce que**
la structure de fondation de type flottant comprend en outre des bagues d'acier (2), des plaques de renforcement (6) et des plaques de raccordement (7) et des plaques de séparation (9) ;
lesdites bagues d'acier (2) étant des tubes d'acier à double couche, et lesdites bagues d'acier (2) étant installées au niveau des extrémités supérieure et inférieure des montants (1) et coulées d'un seul tenant avec les montants (1) ;
la bague d'acier (2) est formée en soudant des plaques de séparation (9) entre des doubles couches de tubes d'acier, lesdites plaques de séparation étant agencées en cercle ;
les entretoises transversales (3) sont des éléments de raccordement entre les montants et sont soudées aux bagues d'acier (2) ;
une extrémité de l'entretoise inclinée (4) est raccordée à la bague d'acier (2), pendant que l'autre extrémité de celle-ci est fixée à une entretoise transversale inférieure (3), afin que les entretoises inclinées (4) et les entretoises transversales (3) forment des zones de joint en forme de K, lesdites entretoises transversales (3) étant raccordées aux entretoises inclinées (4) par l'intermédiaire des plaques de raccordement (7) ;
les plaques de pilonnement (5) sont situées sous les montants (1) et soudées sur la partie inférieure des bagues d'acier (2) ;
les plaques de renforcement (6) sont agencées en cercle et agencées à intervalles sur la plaque de pilonnement (5) ; et les plaques de renforcement (6) sont soudées aux bagues d'acier (2) et aux plaques de pilonnement (5) ; une extrémité de l'entretoise transversale (3) étant insérée dans le tube d'acier de la couche interne de la bague d'acier (2), et soudée aux deux couches de tubes d'acier de la bague d'acier (2) sur le côté d'insertion.

2. Structure de fondation de type flottant en béton précontraint supporté par des tubes d'acier selon la revendication 1, dans les zones de joint en forme de K, lesdites bagues de renforcement (8) étant gainés et soudés sur les entretoises transversales (3) ; des premières plaques de raccordement étant insérées dans les parties inférieures des entretoises transversales inférieures (3) à travers les bagues de renforcement (8) et soudées aux parois de tube d'acier des entretoises transversales (3) et aux bagues de renforcement (8), respectivement ; des encoches étant formées au niveau des extrémités des tubes d'acier des entretoises inclinées (4) le long de leurs sections, et le degré d'encoche étant le même que l'épaisseur des secondes plaques de raccordement ; lesdites secondes plaques de raccordement étant insérées dans les encoches et soudées aux tubes d'acier des entretoises inclinées (4) des deux côtés des encoches, respectivement ; et lesdites premières plaques de raccordement étant soudées aux secondes plaques de raccordement.

3. Structure de fondation de type flottant en béton précontraint supporté par des tubes d'acier selon la revendication 2, ladite plaque de pilonnement (5) étant une plaque d'acier avec des trous, la perméabilité à l'air étant de 10 % à 15 % et le nombre de trous étant de 20 à 24 ; lesdites plaques de renforcement (6) étant des plaques d'acier trapézoïdales ou triangulaires ; lesdites bagues de renforcement (8) étant des plaques d'acier pleines circulaires ; et lesdites plaques de renforcement (6), lesdites plaques de raccordement (7) et lesdites plaques de séparation (9) étant des plaques d'acier carrées.

4. Structure de fondation de type flottant en béton précontraint supporté par des tubes d'acier selon la revendication 1, 2 ou 3, lesdits montants (1) étant constitués d'une structure en béton creuse comportant des conduits précontraints retenues dans celle-ci et possédant des sections transversales circulaires ou carrées.

5. Structure de fondation de type flottant en béton précontraint supporté par des tubes d'acier selon la revendication 1, 2 ou 3, lesdites entretoises transversales (3) étant constituées d'une structure de tubes d'acier remplie de béton possédant des sections transversales circulaires ou carrées, et lesdites entretoises inclinées (4) étant des tubes creux d'acier possédant des sections circulaires ou carrées.

6. Structure de fondation de type flottant en béton précontraint supporté par des tubes d'acier selon la revendication 1, 2 ou 3, ledit béton rempli à l'intérieur des bagues d'acier (2) étant du BUHP, et ledit béton dans les montants (1) étant du béton ordinaire ; ledit béton rempli dans les sections d'entretoises transversales où sont situées les plaques de raccordement étant du BUHP ; et du béton ordinaire étant rempli dans d'autres zones des entretoises transversales et dans les entretoises transversales sans les plaques de raccordement.

7. Structure de fondation de type flottant en béton précontraint supporté par des tubes d'acier selon la revendication 1, 2 ou 3, un générateur d'éolienne étant situé sur l'un quelconque des montants (1).
